# FASCICULE DE BREVET EUROPEEN

(11) **EP 2 721 977 B1**
(45) Date de publication et mention de la délivrance du brevet: **29.03.2017**
(21) Numéro de dépôt: 13199848.6
(22) Date de dépôt: 23.04.2010
(51) Int. Cl.: A47J 37/04

(54) **Appareil de cuisson adapté à l'utilisation d'une faible quantité de matière grasse**
Kochgerät, das für die Verwendung einer geringen Fettmenge geeignet ist
Cooking apparatus adapted to the use of a small amount of fat

(30) Priorité: 27.04.2009 FR 0902025
(43) Date de publication de la demande: 23.04.2014
(62) Demande divisionnaire de: 10727031.6
(73) Titulaire: SEB S.A., 69130 Ecully (FR)
(72) Inventeur: Sobole, Céline, 21260 Sacquenay (FR); Balandier, Jean-Marie, 21490 Bretigny (FR)
(74) Mandataire: Poindron, Cyrille

(56) Documents cités:
- WO-A-89/10085
- WO-A-2006/000700

## Description

La présente invention concerne le domaine technique général des appareils de cuisson d'aliments.

La présente invention concerne plus particulièrement le domaine technique des appareils de cuisson prévus pour frire les aliments à partir d'une faible quantité de matière grasse. La présente invention concerne notamment, mais non exclusivement, les appareils domestiques.

Un appareil de cuisson du type précité est connu du document WO 2006/000699 ou du document WO2006/000700. Cet appareil comporte une enceinte de cuisson associée à un dispositif de chauffage produisant un flux d'air chaud envoyé à l'intérieur de ladite enceinte de cuisson. Un inconvénient de la construction de cet appareil réside toutefois dans le fait que le chauffage est localisé. Notamment, lors de la réalisation de frites à partir de pommes de terre fraîches, le chauffage localisé conduit à des reprises d'humidité des morceaux d'aliments, ce qui contribue à nécessiter un temps de cuisson important pour sécher suffisamment les aliments.

Il est connu du document WO89/10085 un appareil de cuisson utilisant un dispositif de chauffage agencé dans l'enceinte de cuisson. Le chauffage de l'enceinte de cuisson est donc plus homogène. Toutefois ce document ne mentionne pas de performances particulières concernant la qualité ou la rapidité de la cuisson. De plus ce document n'envisage pas de brassage des aliments avec de la matière grasse.

Un objet de la présente invention est de proposer un appareil de cuisson permettant d'obtenir plus rapidement des aliments frits en utilisant une quantité de matière grasse plus faible que pour une cuisson en bain d'huile.

Un autre objet de la présente invention est de proposer un appareil de cuisson permettant d'obtenir plus rapidement des aliments frits en préservant leurs qualités organoleptiques et nutritionnelles.

Ces objets sont atteints avec un appareil de cuisson selon la revendication 1.

Cette disposition permet d'optimiser la vitesse de cuisson tout en obtenant une bonne qualité de cuisson. La limitation de l'exposition des aliments au rayonnement des moyens de chauffe dans une étape initiale de séchage et de cuisson des aliments permet de conserver dans l'enceinte de cuisson une température suffisante pour évaporer l'eau contenue dans les aliments et sécher leur surface, sans atteindre une température suffisante pour déclencher la réaction de Maillard. L'évacuation de l'humidité contenue dans les aliments contribue à maintenir une température relativement modérée à l'intérieur de l'enceinte de cuisson au cours de cette étape initiale. La gélatinisation de l'amidon rendant les pommes de terre comestibles intervient lors de cette étape initiale. Le séchage de la surface des aliments favorise le déroulement de la réaction de Maillard et permet d'améliorer la tenue mécanique des aliments, notamment des pommes de terre découpées en bâtonnets pour faire des frites, en durcissant leur surface. La forme des aliments peut ainsi être conservée. Le séchage étant préférentiellement localisé sur les arêtes, la coloration se fait aussi sur les arêtes, ce qui permet d'obtenir une bonne qualité visuelle des frites obtenues à partir de pommes de terre fraîches. Lorsque les aliments ont été séchés, l'utilisation d'une vitesse de ventilation importante n'est plus nécessaire pour l'étape ultérieure de coloration des aliments. Ainsi des temps de cuisson très courts peuvent être obtenus même avec des pommes de terre fraîches. Le dessèchement important lors d'une première phase permet de mieux conserver la géométrie des frites, et permet aussi d'utiliser des températures moins élevées lors d'une deuxième phase.

Selon d'autres modes de réalisation :
- les moyens de ventilation génèrent une vitesse d'air sur les aliments supérieure à 2 m/s,
- l'angle d'inclinaison de l'axe de rotation du réceptacle par rapport à la verticale est compris entre 20° et 50°.
- l'angle d'inclinaison de l'axe de rotation du réceptacle par rapport à la verticale est compris entre 33° et 45°.
- l'enceinte de cuisson est formée dans un bâti présentant une ouverture d'accès pour l'introduction des aliments.
- une ouverture d'accès est fermée par un couvercle monté pivotant sur le bâti.
- les moyens de chauffe sont montés sous une coupelle, la coupelle présente une face inférieure réalisée en matériau formant réflecteur.
- les moyens de chauffe sont formés par un élément chauffant blindé, présentant une configuration annulaire dégageant une zone centrale.
- le réceptacle forme une cuve contenant les aliments et la matière grasse.
- un organe de remuage s'étend à l'intérieur du réceptacle.

L'invention sera mieux comprise à l'étude d'un exemple de réalisation, pris à titre nullement limitatif, illustré dans les figures annexées 1 et 2, dans lesquelles :
- la figure 1 est une vue latérale schématique en coupe d'un appareil de cuisson selon l'invention,
- la figure 2 est une vue en perspective de dessous du dispositif de chauffe et du dispositif de ventilation.

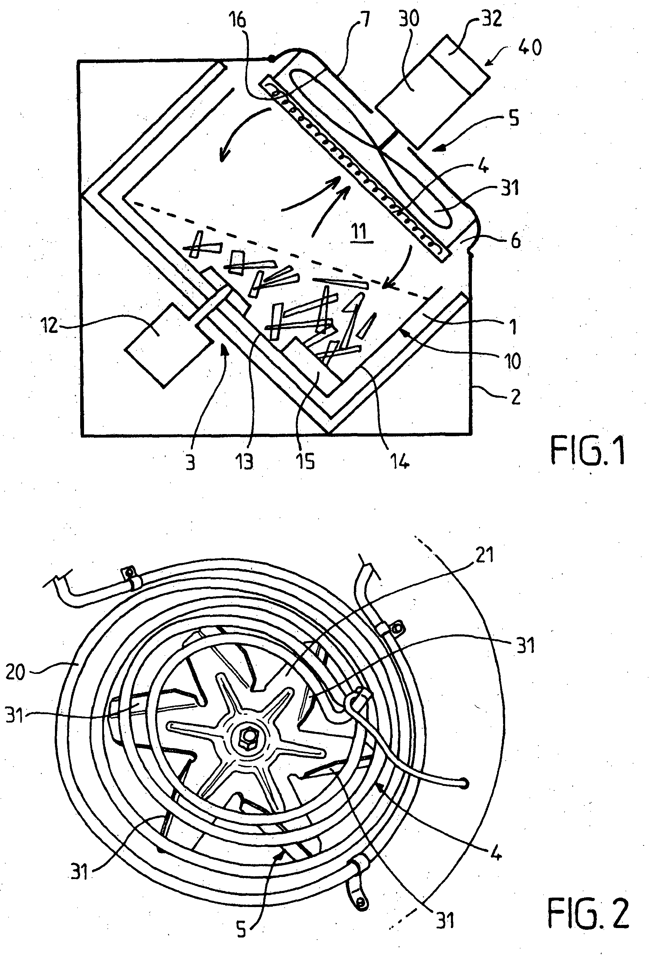

L'appareil illustré sur la figure 1 comporte une enceinte de cuisson 1 logée dans un bâti 2. L'enceinte de cuisson 1 est associée à des moyens de brassage d'aliments 3, à des moyens de chauffe 4 aptes à chauffer par rayonnement ainsi qu'à des moyens de ventilation 5. Tel que bien visible sur la figure 1 les moyens de chauffe 4 sont agencés dans l'enceinte de cuisson 1. Le bâti 2 présente une ouverture d'accès 6 prévue pour l'introduction des aliments dans l'enceinte de cuisson 1. L'ouverture d'accès 6 est avantageusement fermée par un couvercle 7. Le couvercle 7 est par exemple monté pivotant sur le bâti 2.

Les moyens de brassage d'aliments 3 comportent un réceptacle 10 logé dans l'enceinte de cuisson 1. Le réceptacle 10 présente une ouverture 11. Le réceptacle 10 est de préférence agencé à distance des parois internes de l'enceinte de cuisson 1, notamment pour éviter les pertes de calories vers l'extérieur et optimiser la puissance des moyens de chauffe 4. Le réceptacle 10 est entraîné en rotation selon un axe incliné par un moteur d'entraînement 12. La vitesse de rotation du réceptacle 10 est par exemple de l'ordre de 24 tours/min. L'angle d'inclinaison de l'axe de rotation du réceptacle 10 par rapport à la verticale est avantageusement compris entre 20° et 50° et de préférence compris entre 33° et 45°.

Pour pouvoir réaliser des frites à partir de pommes de terre fraîches et d'une quantité réduite de matière grasse, par exemple 14 ml pour 1 kg de pommes de terre fraîches, le réceptacle 10 présente de préférence un fond 13 plein prolongé par une paroi latérale 14 pleine. Ainsi le réceptacle 10 forme une cuve. Le réceptacle 10 peut contenir ainsi de la matière grasse en vue de l'enduction des aliments lors de la rotation dudit réceptacle 10. Le réceptacle 10 peut aussi être utilisé pour faire frire ou rissoler des aliments dans une quantité d'huile plus importante. Selon l'exemple de réalisation illustré sur la figure 1, l'ouverture 11 est délimitée par le bord supérieur de la paroi latérale pleine 14.

Un organe de remuage 15 s'étendant à l'intérieur du réceptacle 10 est prévu pour entraîner au moins une partie des morceaux d'aliments lors de la rotation du réceptacle 10. L'organe de remuage est entraîné en rotation avec le réceptacle 10. Plus particulièrement, l'organe de remuage 15 est fixé dans le réceptacle 10. Lors de la rotation du réceptacle 10, les aliments repoussés par l'organe de remuage 15 retombent dans le réceptacle 10 en se déplaçant les uns par rapport aux autres. L'organe de remuage 15 permet de réaliser ainsi un brassage des aliments lors de la rotation du réceptacle 10.

Les moyens de chauffe 4 sont disposés à l'intérieur de l'enceinte de cuisson 1 en regard de l'ouverture 11 du réceptacle 10. Ainsi le chauffage de l'enceinte de cuisson 1 s'effectue de manière relativement homogène, notamment à la surface des aliments disposés dans le réceptacle 10. Les moyens de chauffe 4 agencés à l'intérieur de l'enceinte de cuisson 1 permettent de chauffer plus globalement l'enceinte de cuisson 1 et d'éviter les reprises d'humidité. Pour une quantité d'aliments à frire correspondant à 1 kg de pommes de terre fraîches ou à 750 g de pommes de terres surgelées précuites, la puissance des moyens de chauffe 4 est par exemple comprise entre 2000 W et 3000 W.

Tel que mieux visible sur la figure 2, les moyens de chauffe 4 sont avantageusement formés par un élément chauffant blindé 20. L'élément chauffant blindé 20 présente avantageusement une configuration annulaire dégageant une zone centrale 21. L'élément chauffant blindé 20 est par exemple enroulé en spirale autour de la zone centrale 21. Les moyens de chauffe 4 sont avantageusement montés sous une coupelle 16. La coupelle 16 est par exemple formée par la face intérieure du couvercle 7 ou montée sur la face intérieure du couvercle 7. La coupelle 16 peut présenter une face inférieure réalisée en matériau formant réflecteur.

Les moyens de ventilation 5 comprennent un moteur de ventilation 30 avantageusement disposé à l'extérieur de l'enceinte de cuisson 1 ainsi que des organes de ventilation 31 entraînés par le moteur de ventilation 30. Les organes de ventilation 31 sont disposés à l'intérieur de l'enceinte de cuisson 1 en regard de l'ouverture 11 du réceptacle 10. Les organes de ventilation 31 sont avantageusement montés entre la coupelle 16 et les moyens de chauffe 4. Plus particulièrement, les organes de ventilation 31 sont prévus pour diriger un flux d'air sur les moyens de chauffe 4. A cet effet la zone d'aspiration des organes de ventilation 31 correspond avantageusement à la zone centrale 21. Ainsi les organes de ventilation 31 forment une turbine centrifuge. La coupelle 16 présente avantageusement une partie périphérique incurvée prévue pour diriger le flux d'air chaud en regard de l'ouverture 11 du réceptacle 10.

Les moyens de ventilation 5 sont associés à un dispositif de commande 32 prévu pour régler la vitesse de rotation du moteur de ventilation 30, par exemple avec une vitesse élevée et une vitesse plus faible. Lorsque la vitesse de rotation du moteur de ventilation 30 est élevée, par exemple de l'ordre de 3000 tours/min, le flux d'air propulsé par les organes de ventilation 31 permet de limiter la température des moyens de chauffe 4. Le rayonnement des moyens de chauffe intervenant essentiellement à partir d'un niveau de température de 150°C dans l'enceinte de cuisson 1 pour des moyens de chauffe 4 tels que l'élément chauffant blindé 20, le flux d'air propulsé par les organes de ventilation 31 permet ainsi de limiter le rayonnement des moyens de chauffe 4. Lorsque la vitesse de rotation du moteur de ventilation 30 est plus faible, par exemple de l'ordre de 1500 tours/min, le refroidissement des moyens de chauffe 4 est moins important, le flux d'air propulsé par les organes de ventilation 31 ne permet plus de limiter autant le rayonnement des moyens de chauffe 4.

La présente invention s'utilise et fonctionne de la manière suivante.

L'utilisateur place dans le réceptacle 10 la quantité désirée d'aliments, par exemple 1 kg de pommes de terre fraîches avec 14 ml d'huile, ou bien 750 g de pommes de terre surgelées précuites. L'utilisateur ferme ensuite le couvercle 7 et met en marche l'appareil. Le réceptacle 10 est alors entraîné par le moteur d'entraînement 12, les organes de ventilation 31 sont alors entraînés par le moteur de ventilation 30 et l'enceinte de cuisson 1 est chauffée par les moyens de chauffe 4. Lors de la rotation du réceptacle 10 l'organe de remuage 15 soulève périodiquement au moins une partie des morceaux d'aliments et permet le brassage des aliments présents dans le réceptacle 10.

Dans une première phase de séchage et de cuisson des aliments, la vitesse de rotation du moteur de ventilation 30 est élevée, par exemple de l'ordre de 3000 tours/min. Le flux d'air propulsé par les organes de ventilation 31 permet de limiter le rayonnement des moyens de chauffe 4, d'homogénéiser la température à l'intérieur de l'enceinte de cuisson 1, et de sécher les aliments présents dans l'enceinte de cuisson 1, tout en assurant la cuisson desdits aliments. Le remuage des morceaux d'aliments par l'organe de remuage 15 permet d'obtenir une meilleure homogénéité de séchage des différents morceaux d'aliments. La durée de la première phase de séchage et de cuisson des aliments est par exemple de 8 min pour des frites réalisées à partir d'1 kg de pommes de terre fraîches et de 14 ml d'huile.

Dans une deuxième phase de coloration des aliments, la vitesse de rotation du moteur de ventilation 30 est moins élevée, par exemple de l'ordre de 1500 tours/min. Le flux d'air propulsé par les organes de ventilation 31 est insuffisant pour empêcher le rayonnement des moyens de chauffe 4. Le rayonnement des moyens de chauffe 4 associé à la température élevée dans l'enceinte de cuisson, de préférence supérieure à 150°C, permet de développer la réaction de Maillard et de colorer les aliments présents dans l'enceinte de cuisson 1. Le remuage des morceaux d'aliments par l'organe de remuage 15 permet une meilleure homogénéité de coloration des différents morceaux d'aliments. La durée de la deuxième phase de séchage et de cuisson des aliments est par exemple de 12 min pour des frites réalisées à partir d'1 kg de pommes de terre fraîches et de 14 ml d'huile.

L'appareil proposé met ainsi en oeuvre un procédé de friture d'aliments utilisant un brassage desdits aliments dans l'enceinte de cuisson 1, associé à une ventilation de ladite enceinte de cuisson 1 et à un chauffage de ladite enceinte de cuisson 1 utilisant les moyens de chauffe 4 aptes au chauffage par rayonnement. Ce procédé consiste à limiter l'exposition des aliments au rayonnement des moyens de chauffe 4 dans une étape initiale de séchage et de cuisson des aliments et à exposer davantage les aliments au rayonnement des moyens de chauffe 4 dans une étape ultérieure de coloration des aliments. La quantité de matière grasse utilisée est plus faible que pour une cuisson en bain d'huile.

Ainsi l'appareil comporte des moyens 40 pour moduler l'exposition des aliments au rayonnement des moyens de chauffe 4, lesdits moyens étant prévus pour la mise en oeuvre dudit procédé de friture d'aliments.

Les moyens 40 pour module l'exposition des aliments au rayonnement des moyens de chauffe 4 comprennent le dispositif de commande 32 prévu pour régler la vitesse de rotation du moteur de ventilation 30 appartenant aux moyens de ventilation 5.

Dans l'exemple de réalisation décrit, la limitation de l'exposition des aliments au rayonnement des moyens de chauffe 4 dans l'étape initiale de séchage et de cuisson des aliments est obtenue en limitant le rayonnement des moyens de chauffe 4.

A titre de variante, des moyens de chauffe différents peuvent être utilisés pour l'étape initiale de séchage et de cuisson des aliments et pour l'étape ultérieure de coloration des aliments.

D'autres constructions permettant de limiter le rayonnement des moyens de chauffe, notamment, l'alimentation des moyens de chauffe selon au moins deux niveaux de puissance, peuvent également être envisagées.

Dans l'exemple de réalisation décrit, la limitation du rayonnement des moyens de chauffe 4 dans l'étape initiale de séchage et de cuisson des aliments est obtenue en ventilant les moyens de chauffe 4. Toutefois d'autres constructions permettant de limiter le rayonnement des moyens de chauffe, notamment l'alimentation des moyens de chauffe selon au moins deux niveaux de puissance, ou l'utilisation de moyens de chauffe différents, peuvent être envisagées.

Dans l'exemple de réalisation décrit, le passage de l'étape initiale de séchage et de cuisson des aliments à l'étape ultérieure de coloration des aliments est obtenu en réduisant la ventilation des moyens de chauffe 4.

A titre de variante, la ventilation des moyens de chauffe 4 peut être arrêtée au moins temporairement lors de l'étape ultérieure de coloration des aliments.

Toutefois la poursuite de la ventilation de l'enceinte de cuisson permet de favoriser l'homogénéisation de la température à l'intérieur de l'enceinte de cuisson.

La température dans l'enceinte de cuisson supérieure à 150°C lors de l'étape ultérieure de coloration des aliments permet de développer la réaction de Maillard. Si désiré la température dans l'enceinte dé cuisson peut être supérieure à 200°C lors de l'étape ultérieure de coloration des aliments.

Lors de l'étape initiale de séchage et de cuisson des aliments, la vitesse d'air sur les aliments est supérieure à 1,5 m/s, et de préférence supérieure à 2 m/s.

Selon une forme de réalisation préférée, notamment pour un appareil domestique, lors de l'étape ultérieure de coloration des aliments, la vitesse d'air sur les aliments est inférieure à 1,5 m/s, et de préférence inférieure à 1 m/s.

Selon une forme de réalisation préférée, la vitesse d'air sur les aliments est réduite d'au moins 20% entre l'étape initiale de séchage et de cuisson des aliments et l'étape ultérieure de coloration des aliments.

Pour réaliser des frites à partir de pommes de terre fraîches, le procédé utilise un brassage des aliments avec de la matière grasse dans le réceptacle 10 agencé dans l'enceinte de cuisson 1.

Ainsi des frites présentant un taux de matière grasse peu élevé peuvent être obtenues en 17 à 22 min avec le procédé précité à partir d'1 kg de pommes de terre fraîches et de 14 ml d'huile, selon la variété de pommes de terres utilisée.

Par ailleurs, des frites peuvent être obtenues en 15 min avec le procédé précité à partir de 750 g de pommes de terre surgelées précuites, sans ajout de matière grasse, ou avec un ajout minimal dé matière grasse pour améliorer le croustillant.

Si désiré plusieurs vitesses de rotation du réceptacle 10 et/ou plusieurs puissances de chauffe des moyens de chauffe 4 peuvent être envisagés, notamment en fonction de la géométrie des aliments à frire, et/ou de la traille des aliments à frire, et/ou de la nature des aliments à frire (aliments frais ou aliments surgelés précuits). La modulation de la vitesse de rotation des organes de ventilation 31 et/ou la durée de l'étape initiale de séchage et de cuisson des aliments et/ou de l'étape ultérieure de coloration des aliments peut également être envisagée notamment en fonction de la géométrie des aliments à frire, et/ou de la taille des aliments à frire, et/ou de la nature des aliments à frire.

La présente invention permet d'obtenir des frites à partir de 1 kg de pommes de terre fraîches découpées et de 14 ml d'huile, en 20 min, ce qui est plus rapide qu'avec une friteuse en bain d'huile pour un départ à froid, et qu'avec un appareil de cuisson tel que décrit dans les documents WO 2006/000699 ou WO2006/000700. De plus les frites ainsi obtenues sont croustillantes avec une forme bien conservée. La qualité organoleptique est comparable à celle des frites obtenues dans un appareil de cuisson tel que décrit dans les documents WO 2006/000699 ou WO2006/000700, du fait de l'utilisation d'une quantité réduite de matière grasse.

L'utilisation d'un réceptacle formant une cuve permet aussi de frire dans une quantité d'huile plus importante tout en remuant les aliments.

A titre de variante, les moyens de chauffe 4 ne sont pas nécessairement formés par l'élément chauffant blindé 20.

A titre de variante, les moyens de chauffe 4 peuvent comporter plusieurs éléments chauffants, par exemple un premier élément chauffant utilisé pour l'étape initiale de séchage et de cuisson des aliments, ce premier élément chauffant étant complété ou remplacé par un deuxième élément chauffant pour l'étape ultérieure de coloration des aliments. Les moyens 40 pour moduler l'exposition des aliments au rayonnement des moyens de chauffe 4 comprennent alors des moyens de sélection de l'alimentation d'un ou plusieurs éléments chauffants.

A titre de variante, les moyens de chauffe 4 peuvent être alimentés à puissance variable. Les moyens 40 pour moduler l'exposition des aliments au rayonnement des moyens de chauffe 4 comprennent alors des moyens pour moduler la puissance des moyens de chauffe 4.

A titre de variante, les moyens de chauffe 4 peuvent être associés à un écran susceptible d'occuper au moins une première configuration dans laquelle l'exposition des aliments au rayonnement des moyens de chauffe 4 est atténuée et une deuxième configuration dans laquelle l'exposition des aliments au rayonnement des moyens de chauffe 4 est plus importante que dans la première configuration. L'écran peut par exemple être interposé entre les moyens de chauffe 4 et les aliments, pour occulter plus ou moins le rayonnement des moyens de chauffe 4, ou encore être agencé au moins partiellement dans le flux d'air issu des moyens de ventilation 5, pour dévier plus ou moins le flux d'air hors des moyens de ventilation 5. Les moyens 40 pour moduler l'exposition des aliments au rayonnement des moyens de chauffe 4 comprennent alors des moyens pour modifier la configuration de l'écran.

A titre de variante qui ne fait pas partie de cette invention, le brassage des aliments dans le réceptacle 10 n'utilise pas nécessairement un organe de remuage fixe par rapport au réceptacle 10 mais pourrait notamment être obtenu en utilisant une pale mobile par rapport audit réceptacle, la pale et/ou le réceptacle pouvant être entraînés en rotation.

Le réceptacle 10 est apte à contenir de la matière grasse et des aliments, mais ne présente pas nécessairement un fond 13 plein prolongé par une paroi latérale 14 pleine. Notamment la paroi latérale 14 peut être ajourée dans sa partie supérieure à proximité de l'ouverture 11.

La présente invention n'est nullement limitée à l'exemple de réalisation décrit et à ses variantes, mais englobe de nombreuses modifications dans le cadre des revendications.

## Revendications

1. Appareil de cuisson comportant :
- une enceinte de cuisson (1)
- des moyens de brassage d'aliments (3),
- un réceptacle (10) apte à contenir des aliments et de la matière grasse, le réceptacle (10) étant entraîné en rotation selon un axe incliné, et
- un organe de remuage (15) fixe par rapport au réceptacle (10),
- des moyens de chauffe (4) montés dans l'enceinte de cuisson et aptes à chauffer par rayonnement
- des moyens de ventilation (5),
**caractérisé en ce que** :
- l'appareil comprend des moyens pour moduler l'exposition des aliments à un rayonnement des moyens de chauffe, de sorte à limiter l'exposition des aliments au rayonnement des moyens de chauffe pendant une étape initiale de séchage et de cuisson et à exposer davantage les aliments au rayonnement des moyens de chauffe pendant une étape ultérieure de coloration des aliments, dans lequel les moyens pour moduler l'exposition des aliments à un rayonnement comprennent un dispositif de commande prévu pour régler la vitesse de rotation d'un moteur de ventilation appartenant aux moyens de ventilation
- les moyens de ventilation sont agencés pour générer une vitesse d'air sur les aliments supérieure à 1,5 m/s pendant l'étape initiale de séchage et de cuisson.

2. Appareil de cuisson selon la revendication 1 **caractérisé en ce que** les moyens de ventilation génèrent une vitesse d'air sur les aliments supérieure à 2 m/s.

3. Appareil de cuisson selon l'une des revendications 1 ou 2, **caractérisé en ce que** l'angle d'inclinaison de l'axe de rotation du réceptacle (10) par rapport à la verticale est compris entre 20° et 50°.

4. Appareil de cuisson selon la revendication 3, **caractérisé en ce que** l'angle d'inclinaison de l'axe de rotation du réceptacle (10) par rapport à la verticale est compris entre 33° et 45°.

5. Appareil de cuisson selon l'une des revendications 1 à 4, **caractérisé en ce que** l'enceinte de cuisson est formée dans un bâti (2) présentant une ouverture d'accès (6) pour l'introduction des aliments.

6. Appareil de cuisson selon la revendication précédente, **caractérisé en ce que** une ouverture d'accès (6) est fermée par un couvercle (7) monté pivotant sur le bâti (2).

7. Appareil de cuisson selon l'une des revendications 1 à 6, **caractérisé en ce que** les moyens de chauffe 4 sont montés sous une coupelle (16), la coupelle (16) présente une face inférieure réalisée en matériau formant réflecteur.

8. Appareil de cuisson selon l'une des revendications 1 à 7, **caractérisé en ce que** les moyens de chauffe sont formés par un élément chauffant blindé (20), présentant une configuration annulaire dégageant une zone centrale (21).

9. Appareil de cuisson selon l'une des revendications 1 à 7, **caractérisé en ce que** le réceptacle (10) forme une cuve contenant les aliments et la matière grasse.

10. Appareil de cuisson selon l'une des revendications 1 à 8, **caractérisé en ce qu'**un organe de remuage (15) s'étend à l'intérieur du réceptacle (10).

## Patentansprüche

1. Kochgerät, das folgendes umfasst:
- Einen Garraum (1)
- Rührmittel für Nahrungsmittel (3),
- einen Behälter (10), der geeignet ist, Nahrungsmittel und Fett aufzunehmen, wobei der Behälter (10) in einer geneigten Achse in Drehung versetzt wird, und
- ein gegenüber dem Behälter (10) feststehendes Rührwerk (15),
- im Garraum montierte Heizmittel (4), die geeignet sind, durch Strahlung zu heizen
- Belüftungsmittel (5),
**dadurch gekennzeichnet, dass**:
- das Gerät Mittel zur Modulation der Bestrahlung der Nahrungsmittel durch die Heizmittel umfasst, so dass die Bestrahlung der Nahrungsmittel durch die Heizmittel bei einem ersten Schritt mit Trocknen und Garen begrenzt wird, und die Nahrungsmittel bei einem späteren Schritt zur Einfärbung der Nahrungsmittel stärker bestrahlt werden, wobei die Mittel zur Modulation der Bestrahlung der Nahrungsmittel eine Steuervorrichtung für die Regelung der Drehzahl eines Belüftungsmotors umfassen, der zu den Belüftungsmitteln gehört,
- die Belüftungsmittel so gestaltet sind, dass sie beim ersten Schritt mit Trocknen und Garen eine Luftgeschwindigkeit auf den Nahrungsmitteln von über 1,5 m/s erzeugen.

2. Kochgerät nach Anspruch 1, **dadurch gekennzeichnet, dass** die Belüftungsmittel eine Luftgeschwindigkeit auf den Nahrungsmitteln von über 2 m/s erzeugen.

3. Kochgerät nach einem der Ansprüche 1 oder 2, **dadurch gekennzeichnet, dass** der Neigungswinkel der Drehachse des Behälters (10) im Verhältnis zur Senkrechten zwischen 20° und 50° beträgt.

4. Kochgerät nach Anspruch 3, **dadurch gekennzeichnet, dass** der Neigungswinkel der Drehachse des Behälters (10) im Verhältnis zur Senkrechten zwischen 33° und 45° beträgt.

5. Kochgerät nach einem der Ansprüche 1 bis 4, **dadurch gekennzeichnet, dass** der Garraum in einem Rahmen (2) ausgebildet ist, das eine Zugangsöffnung (6) für das Einlegen der Nahrungsmittel aufweist.

6. Kochgerät nach dem vorstehenden Anspruch, **dadurch gekennzeichnet, dass** die Zugangsöffnung (6) mit einem Deckel (7) verschlossen wird, der schwenkbar am Rahmen (2) montiert ist.

7. Kochgerät nach einem der Ansprüche 1 bis 6, **dadurch gekennzeichnet, dass** die Heizmittel (4) unter einer Schale (16) montiert sind, wobei die Schale (16) eine Unterseite aufweist, die aus einem Reflektor bildenden Material ausgeführt ist.

8. Kochgerät nach einem der Ansprüche 1 bis 7, **dadurch gekennzeichnet, dass** die Heizmittel aus einem geschirmten Heizelement (20) gebildet sind, das eine Ringkonfiguration aufweist, die eine Mittelzone (21) freigibt.

9. Kochgerät nach einem der Ansprüche 1 bis 7, **dadurch gekennzeichnet, dass** der Behälter (10) eine Wanne bildet, die die Nahrungsmittel und das Fett enthält.

10. Kochgerät nach einem der Ansprüche 1 bis 8, **dadurch gekennzeichnet, dass** sich ein Rührwerk (15) im Innern des Behälters (10) erstreckt.

## Claims

1. A cooking appliance including:
- a cooking chamber (1)
- means for mixing foodstuffs (3),
- a receptacle (10) able to contain foodstuffs and fat, the receptacle (10) being driven into rotation along a tilted axis, and
- a stirring member (15) fixed relatively to the receptacle (10),
- heating means (4) mounted in the cooking chamber and capable of heating by radiant heat,
- ventilation means (5),
**characterized in that**:
- the appliance comprises means for modulating exposure of the foodstuffs to radiant heat from the heating means, so as to limit exposure of the foodstuffs to radiant heat from the heating means during an initial stage of drying and cooking the foodstuffs and to more expose the foodstuffs to radiant heat from the heating means during a later stage for coloring foodstuffs, wherein the means for modulating the exposure of the foodstuffs to radiant heat comprise a control device provided for adjusting the speed of rotation of a ventilation motor belonging to the ventilation means,
- the ventilation means are laid out so as to generate an air speed on the foodstuffs of more than 1.5 m/s during the initial drying and cooking stage.

2. The cooking appliance according to claim 1, **characterized in that** the ventilation means generate an air speed on the foodstuffs of more than 2 m/s.

3. The cooking appliance according to one of claims 1 or 2, **characterized in that** the tilt angle of the axis of rotation of the receptacle (10) relatively to the vertical is comprised between 20° and 50°.

4. The cooking appliance according to claim 3, **characterized in that** the tilt angle of the axis of rotation of the receptacle (10) relatively to the vertical is comprised between 33° and 45°.

5. The cooking appliance according to one of claims 1 to 4, **characterized in that** the cooking chamber is formed in a frame (2) having an access opening (6) for introducing the foodstuffs.

6. The cooking appliance according to the preceding claim, **characterized in that** the access opening (6) is closed by a pivotally mounted lid (7) on the frame (2).

7. The cooking appliance according to one of claims 1 to 6, **characterized in that** the heating means (4) are mounted under a cup (16), the cup (16) has a lower face made in a material forming a reflector.

8. The cooking appliance according to one of claims 1 to 7, **characterized in that** the heating means (4) are formed by a shielded heating element (20), having a ring-shaped configuration clearing a central area (21).

9. The cooking appliance according to one of claims 1 to 7, **characterized in that** the receptacle (10) forms a tank containing the foodstuffs and the fat.

10. The cooking appliance according to one of claims 1 to 8, **characterized in that** a stirring member (15) extends inside the receptacle (10).
